# EUROPÄISCHE PATENTSCHRIFT

(11) **EP 2 895 751 B1**
(45) Veröffentlichungstag und Bekanntmachung des Hinweises auf die Patenterteilung: **09.11.2016**
(21) Anmeldenummer: 13760034.2
(22) Anmeldetag: 09.09.2013
(51) Int. Cl.: F16B 5/02, F16B 25/00, F16B 25/10, F16B 35/04

(54) **SCHRAUBE UND IHRE VERWENDUNG**
SCREW AND USE THEREOF
VIS ET SON UTILISATION

(30) Priorität: 11.09.2012 DE 102012216064
(43) Veröffentlichungstag der Anmeldung: 22.07.2015
(73) Patentinhaber: SWG Schraubenwerk Gaisbach GmbH, 74638 Waldenburg (DE)
(72) Erfinder: ROLL, Patrick, 74523 Schwäbisch Hall (DE); STIEBITZ, Günter, 74638 Waldenburg (DE)
(74) Vertreter: Patentanwälte Ruff, Wilhelm, Beier, Dauster & Partner mbB
(86) Internationale Anmeldenummer: PCT/EP2013/068578
(87) Internationale Veröffentlichungsnummer: WO 2014/040943

(56) Entgegenhaltungen:
- US-A1- 2002 110 439
- US-A1- 2004 141 827

## Beschreibung

Die Erfindung geht aus von einer Schraube mit einem Schraubenschaft und zwei Gewindeabschnitten.

Es ist bereits eine Schraube mit einem Schaft bekannt, der zwei durch einen gewindefreien Abschnitt verbundene Gewindeabschnitte aufweist. Der eine Gewindeschaft geht von der Schraubenspitze aus, und der andere Gewindeschaft vom Schraubenkopf. Beide Gewindeabschnitte haben den gleichen Kerndurchmesser, den gleichen Außendurchmesser aber unterschiedliche Steigung. Der Gewindeabschnitt im Bereich des Schraubenkopfs weist eine geringere Steigung auf (DE 203 19 768 U1).

Weiterhin bekannt ist eine Distanzschraube mit zwei Gewindeabschnitten gleichen Kerndurchmessers, gleichen Außendurchmessers und gegebenenfalls mit unterschiedlichen Steigungen. Damit soll ein Bauteil mit Abstand von einer Unterkonstruktion festgelegt werden (EP 0 918 164 B1).

Ebenfalls bekannt ist eine Schraube zum Einsatz bei einem Unterdach, die zwei durch einen gewindefreien Abschnitt getrennte Gewindeabschnitte aufweist. Der am Schraubenkopf beginnende Gewindeabschnitt weist einen größeren Kerndurchmesser, einen größeren Außendurchmesser und eine kleinere Steigung auf als der von der Schraubenspitze ausgehende Gewindebereich. Hiermit soll eine Abstandsbefestigung erreicht werden (DE 296 07 265 U1).

Weiterhin ist eine Schraube bekannt, die zwei durch einen gewindefreien Abschnitt getrennte Gewindeabschnitte aufweist, deren Gewinde die gleiche Gewinderichtung und den gleichen Kerndurchmesser aufweisen. Das Gewinde des näher am Schraubenkopf befindlichen Gewindeabschnitts weist eine kleinere Steigung als das andere von der Schraubenspitze ausgehende Gewinde auf. Zwischen dem Schraubenkopf und dem ersten Gewinde ist ein gewindefreier Abschnitt vorhanden (US 2002/0110439 A1, Figur 7).

Bei einer weiteren bekannten Schraube mit zwei getrennten Gewindeabschnitten wird die größere Steigung des von der Schraubenspitze ausgehenden Gewindes durch ein Doppelganggewinde bewirkt (US 2004/0141827 A1).

Der Erfindung liegt die Aufgabe zu Grunde, eine Schraube mit einer verbesserten Haltekraft zu schaffen.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die Schraube weist also einen von einem Schraubenantriebsende zu einer Schraubenspitze durchgehenden Schaft auf, der von der Schraubenspitze ausgehend einen ersten Gewindeabschnitt und von dem Schraubenantriebsende ausgehend einen zweiten Gewindeabschnitt aufweist. Der Kerndurchmesser beider Gewindeabschnitte ist gleich. Der von dem Schraubenantriebsende ausgehende Gewindeabschnitt enthält ein Haltegewinde, dessen Steigung kleiner und dessen Außendurchmesser größer ist als die entsprechenden Werte des von der Schraubenspitze ausgehenden Schraubgewindes.

Die Schraube dient in erster Linie dazu, ein erstes Element, beispielsweise eine Platte, an einem zweiten Element, beispielsweise einer aus Holz bestehen Unterkonstruktion, anzuschrauben. Dies geschieht, ohne die Platte vorzubohren. Da durch die Platte zunächst das Schraubgewinde hindurchgeschraubt wird, bildet dieses in dem in der Platte gebildeten Loch ein Gegengewinde in dem Material der Platte. Der gegen Ende des Schraubvorgangs in das Loch eingreifende Haltegewindeabschnitt kann wegen der geringeren Steigung seines Gewindes die bereits geformten Gewindewindungen in der Wand der Bohrung in der Platte nicht verwenden. Aufgrund des größeren Außendurchmessers des Haltegewindes kann dieses Gewinde aber dennoch eine sichere auszugfeste Verbindung mit der Platte eingehen.

Diese größere Haltefähigkeit gilt auch dann, wenn das Loch in der zu befestigenden Platte für das Schraubgewinde passend vorgebohrt wird.

Die beiden Gewindeabschnitte können, soweit dies technisch realisierbar ist, mit einem nur geringen axialen Zwischenraum aneinander angrenzen.

In Weiterbildung der Erfindung kann vorgesehen sein, dass zwischen den beiden Gewindeabschnitten ein gewindefreier Schaftabschnitt ausgebildet ist. Dieser trennt also die beiden Gewindeabschnitte unterschiedlicher Steigung und unterschiedlichen Außendurchmessers.

Da die Festlegung der Schraube in dem zu befestigenden Element, also beispielsweise der Platte, durch das Haltegewinde erfolgt, kann es ausreichen, wenn die Schraube keinen eigenen Schraubenkopf aufweist, oder nur einen sehr kleinen Schraubenkopf, der sich nur geringfügig über den Außendurchmesser des Haltegewindes hinaus radial erstreckt.

Um aber einen sauberen Abschluss zu ermöglichen, kann erfindungsgemäß in Weiterbildung vorgesehen sein, dass das Antriebsende der Schraube einen Schraubenkopf aufweist, insbesondere einen Senkkopf, gegebenenfalls mit an der Unterseite des Senkkopfs vorhandenen Vertiefungen zur Aufnahme von Abrieb und/oder Schaberippen.

Schrauben werden in bestimmten Nennmaßen produziert, und die Nennmaße betreffen den Außendurchmesser und dem Außendurchmesser zugeordnete Steigungen. Erfindungsgemäß kann nun bei der von der Erfindung vorgeschlagenen Schraube das Haltegewinde die Steigung eines Normalgewindes aufweisen.

Dementsprechend kann das Schraubgewinde eine Grobgangsteigung aufweisen.

In weiterer Ausgestaltung der Erfindung kann vorgesehen sein, dass die Steigung des Schraubgewindes um einen Wert zwischen etwa 35 % und etwa 45 % größer ist als die Steigung des Haltegewindes.

Erfindungsgemäß kann vorgesehen sein, dass das Schraubgewinde in dem von der Schraubenspitze ausgehenden Schraubgewindeabschnitt der Schraube als Doppelganggewinde ausgebildet ist, um auf diese Weise die größere Steigung dieses Gewindes zu verwirklichen.

Insbesondere kann in Weiterbildung vorgesehen sein, dass die beiden Windungen des Doppelganggewindes einen unterschiedlichen Außendurchmesser aufweisen. Dies wird auch als HiLo- Gewinde bezeichnet.

In Weiterbildung kann der Durchmesser des Haltegewindes, worunter der Außendurchmesser seiner Gewindewindungen zu verstehen ist, um etwa 10% bis 25% größer sein als der Außendurchmesser des Schraubgewindes.

Bei einem Nenndurchmesser von 4mm soll beispielsweise der Außendurchmesser des Haltegewindes bei 4,6mm bis 4,8mm liegen, und der Außendurchmesser des Schraubgewindes in einem Bereich zwischen 3,8mm und 4,2mm. Die Steigungsdifferenz liegt bei etwa 0,8mm.

Bei einer Schraube mit einem Nenndurchmesser von 5mm liegen die entsprechenden Werte bei 5,8mm bis 6,1 mm bzw. bei 4,8mm bis 5,2mm. Hier liegt die Steigungsdifferenz ebenfalls bei etwa 0,8mm.

Das unterhalb des Schraubenantriebsendes beginnende Haltegewinde kann beispielsweise zwischen 2 und 6 Windungen aufweisen, was ausreichend ist. Das Haltegewinde soll sich auch nach eingeschraubter Schraube nur innerhalb des zu befestigenden Bauelements befinden. Es ist daher sinnvoll, dass das Haltegewinde unmittelbar unterhalb des Schraubenantriebsendes bzw. unmittelbar an einen dort vorhandenen Schraubenkopf anschließend angeordnet ist.

Erfindungsgemäß kann in Weiterbildung vorgesehen sein, dass das Schraubgewinde auf einen Abschnitt des zur Herstellung der Schraube benutzen Drahtstifts aufgewalzt ist, der vor dem Walzen den gleichen Durchmesser aufweist wie der gewindefreie Abschnitt der Schraube.

Beim Walzen des Gewindes verringert sich der Kerndurchmesser etwas gegenüber dem Schaftdurchmesser des noch gewindefreien Drahtstifts.

Im Unterschied dazu kann erfindungsgemäß vorgesehen sein, dass das Haltegewinde auf einen Abschnitt des zur Herstellung der Schraube benutzen Drahtstifts aufgewalzt ist, der vor dem Walzen einen größeren Durchmesser aufweist als der Schraubgewindeabschnitt.

Damit wird der Tatsache Rechnung getragen, dass auf die gleiche Länge wegen der kleineren Steigung mehr Material des Drahtstifts in die Gewindewindungen umgewandelt werden muss.

Erfindungsgemäß kann vorgesehen sein, dass die Schraubenspitze eine gewalzte Spitze ist, bei der sich als der Schraubenschaft bzw. der Kern des Schraubgewindes kegelförmig auf eine echte Spitze verringert, längs der das Gewinde sich fortsetzt.

Es ist aber ebenfalls möglich und wird von der Erfindung vorgeschlagen, dass es sich bei der Schraubenspitze um eine Bohrspitze bzw. Schneidspitze aufweist, die also einen echten Bohr- bzw. Schneidvorgang durchführt.

Da die Schraube in erster Linie zum Anschrauben von Plattenelementen an einer aus Holz oder holzähnlichem Material bestehende Unterkonstruktion bestimmt ist, kann erfindungsgemäß vorgesehen sein, dass die Länge des gewindefreien Abschnitts der Dicke herkömmlicher Plattenelemente entspricht. Diese bei den meisten im Handel befindlichen Platten übliche Dicke beträgt 19mm. Auf diese Weise kann dafür gesorgt werden, dass zu keinem Zeitpunkt beide Gewindeabschnitte in Eingriff mit der zu befestigenden Platte stehen.

Die Erfindung schlägt ebenfalls die Verwendung einer Schraube, wie sie hierin beschrieben ist, zum Anschrauben bzw. Festschrauben von Platten an Unterkonstruktionen aus Holz oder holzähnliches Material vor, wobei die Schraube ohne Vorbohren verwendet werden kann.

Insbesondere schlägt die Erfindung in Weiterbildung vor, eine Schraube zu verwenden, deren gewindefreier Abschnitt etwa so groß ist wie die Dicke der festzuschraubenden Platte.

In Weiterbildung der Erfindung kann vorgesehen sein, dass die Länge des Haltegewindes kleiner als oder höchstens gleich groß ist wie die Dicke der anzuschraubenden Platte.

Die Erfindung schlägt ebenfalls ein Verfahren zum Herstellen einer Schraube vor, bei dem vor dem Walzen des Gewindes ein der Länge des Haltegewindes entsprechend langer Abschnitt eines Drahtstifts auf einen Durchmesser aufgestaucht wird, der gegenüber dem Rest des Drahtstifts einen größeren Durchmesser aufweist, beispielsweise einen Durchmesser, der das Aufwalzen des Haltegewindes mit einem um 10 bis 25 % größeren Außendurchmesser gegenüber dem Schraubgewinde bei gleichen Kerndurchmesser ermöglicht. Erst nach diesem Aufstauchen, was zusammen mit einem Fertigungsabschnitt des Schraubenkopfs geschehen kann, wird das Gewinde sowohl auf dem Halteabschnitt als auf dem vorderen Schraubgewindeabschnitt gewalzt. Dies kann in einem Arbeitsgang oder in zwei aufeinander folgenden Arbeitsgängen erfolgen. Bei zwei Arbeitsgängen wird zunächst das Gewinde auf dem Halteabschnitt gewalzt.

Vor oder gleichzeitig mit dem Aufstauchen des Halteabschnitts kann auch ein Schraubenkopf durch Umformung hergestellt werden.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer Schraube nach der Erfindung;
- Figur 2: schematisch die Seitenansicht eines Zwischenprodukts vor dem Walzen des Gewindes;
- Figur 3: den Beginn eines Einschraubvorgangs;
- Figur 4: die Darstellung des weiteren Fortgangs des Einschraubvorgangs;
- Figur 5: den Zustand kurz vor der Beendigung des Vorgangs;
- Figur 6: die vollständige Befestigung einer Platte an einer Unterkonstruktion;
- Figur 7: eine der Figur 1 entsprechende Seitenansicht einer zweiten Ausführungsform.

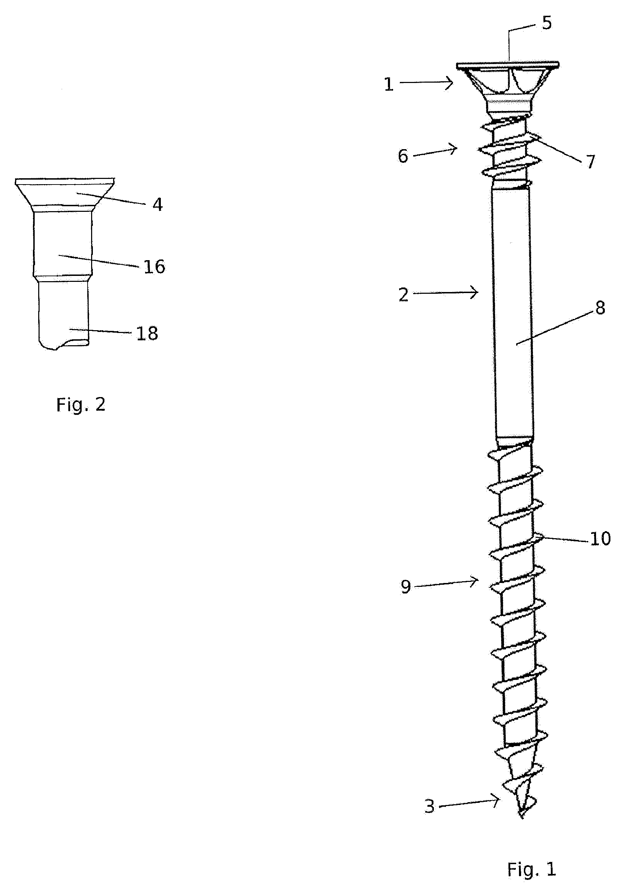

Die Figur 1 zeigt eine Schraube mit einem Schraubenantriebsende 1, einem Schraubenschaft 2 und einer Schraubenspitze 3. An dem in Figur 1 oberen Ende, dem Schraubenantriebsende 1, ist ein Schraubenkopf 4 ausgebildet, bei dem es sich um einen Senkkopf mit einer kegelförmigen Unterseite und einer ebenen Oberseite 5 handelt. An den Schraubenkopf 4 schließt sich ein Gewindeabschnitt 6 an, der ein Haltegewinde 7 mit im dargestellten Beispiel drei Gewindewindungen aufweist. Das Haltegewinde 7 weist einen Außendurchmesser auf, der über die Länge des Haltegewindes 7 konstant ist.

An den Gewindeabschnitt 6 mit dem Haltegewinde 7 schließt sich ein glatter Schaftabschnitt 8 an, in dem die Schraube kein Gewinde aufweist.

An dem gewindefreien Schaftabschnitt 8 schließt sich dann ein Schraubgewindeabschnitt 9 an, in dem die Schraube ein Schraubgewinde 10 aufweist. Das Schraubgewinde 10 ist im dargestellten Beispiel ein eingängiges Gewinde, ebenso wie das Haltegewinde 7. Das Schraubgewinde 10 setzt sich bis in den Bereich der Schraubenspitze 3 fort, wo sich der Kerndurchmesser kegelförmig bis zu der Spitze verringert. Das Schraubgewinde 10 ist bis zur eigentlichen Spitze ausgeprägt.

Der Außendurchmesser des Schraubgewindes 10 ist kleiner als der Außendurchmesser des Haltegewindes 7. Dagegen ist die Steigung des Schraubgewindes 10 größer als die Steigung des Haltegewindes 7.

Der Kerndurchmesser des Gewindeabschnitts 9 mit dem Schraubgewinde 10 entspricht im Wesentlichen dem Kerndurchmesser des Gewindeabschnitts 6 mit dem Haltegewinde 7.

Die Figur 2 zeigt den dem Antriebsende entsprechenden Bereich eines Rohlings zur Herstellung der Schraube nach Figur 1, und zwar vor dem Herstellen der Gewinde. Aus einem zunächst zylindrischen Drahtstift wird in einem Stauchvorgang durch Umformen die noch nicht fertige Form des Schraubenkopfs 4 vorgeformt. Gleichzeitig oder anschließend wird ein Schaftabschnitt 16 auf einen größeren Durchmesser als es dem Drahtstift entspricht aufgestaucht. Nur in dem sich daran anschließenden restlichen Bereich 18 bleibt der Durchmesser des Drahtstifts erhalten, und zwar bis zu der späteren Schraubenspitze 3.

Ausgehend von diesem Rohling, der gegebenenfalls zur vollständigen Ausformung des Schraubenkopfs 4 noch weiter verformt wird, werden dann die beiden Gewinde 7, 10 gewalzt. Dies kann entweder in einem Walzvorgang oder in zwei aufeinander folgenden Schritten erfolgen. Werden die beiden Gewinde in zwei aufeinander folgenden Fertigungsschritten gewalzt, wird zunächst das Gewinde 7 auf den Schaftabschnitt 16 mit dem größeren Durchmesser aufgewalzt.

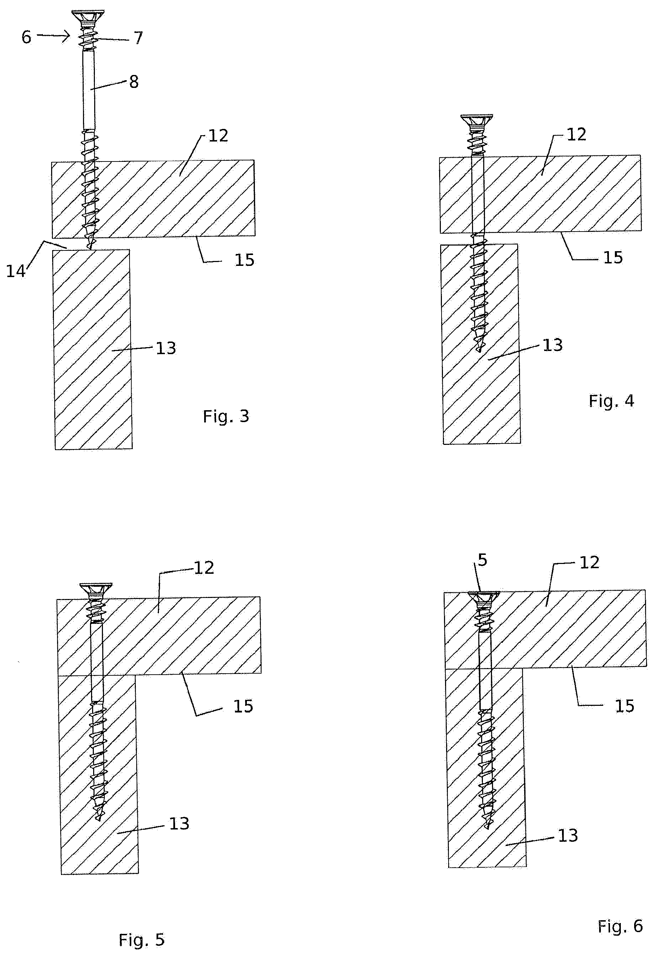

Die Verwendung einer solchen Schraube wird schematisch anhand der folgenden Figuren 3 bis 6 erläutert. Die Schraube soll dazu verwendet werden, eine Platte 12 an einer Unterkonstruktion 13, beispielsweise an der Stirnseite 14 einer weiteren Platte 13, anzuschrauben. Es wird eine Schraube verwendet, deren gewindefreier Abschnitt 8 etwa der Dicke der anzuschraubenden Platte 12 entspricht. Gleichzeitig muss die Länge des Gewindeabschnitts 6 mit dem Haltegewinde 7, gerechnet von der Stirnseite 5 des Schraubenkopfs an, kleiner sein als die Dicke der Platte 12.

Die beiden miteinander zu verbindenden Seiten 12, 13 werden positioniert, und die Schraube wird an der richtigen Stelle auf die Außenseite der Platte 12 aufgelegt und eingeschraubt. Sie schraubt sich durch die Platte 12 hindurch, bis ihre Spitze 3 auf der gegenüberliegenden Unterseite 15 der zu befestigenden Platte 12 austritt. Bevor sich die Schraube in die Unterkonstruktion 13 einschrauben kann, hebt sie zunächst die zu befestigende Platte 12 etwas an. Dadurch entsteht zwischen beiden zu verbindenden Bauteilen ein Spalt, der in Figur 3 sehen ist.

Der Einschraubvorgang geht weiter, wobei der Spalt zwischen den beiden zu verbindenden Bauteilen 12, 13 bestehen bleibt. Sobald das Gewinde 10 des Schraubgewindeabschnitts 9 durch die Platte 12 hindurchgeschraubt ist, ist die Situation erreicht, die in Figur 4 zu sehen ist. In dieser Situation greift die Schraube mit keinem der beiden Gewinde in die zu befestigende Platte 12 ein.

Beim weiteren Schrauben bewegt sich die Schraube wegen der größeren Steigung im Schraubgewinde 10 schneller gegenüber der Unterkonstruktion 13 als gegenüber der zu befestigenden Platte 12. Damit wird die Platte 12 an die Unterkonstruktion herangezogen, der Spalt zwischen den beiden Bauteilen verschwindet. Da der Außendurchmesser des Haltegewindes 7 größer ist als der Außendurchmesser des Schraubgewindes 10, findet der Halteabschnitt ausreichend Halt in der Platte 12. Am Ende des Einschraubvorgangs liegt die Oberseite 5 des Schraubenkopfs 4 bündig in der Oberseite der befestigten Platte 12. Dieser Zustand ist in Figur 6 dargestellt.

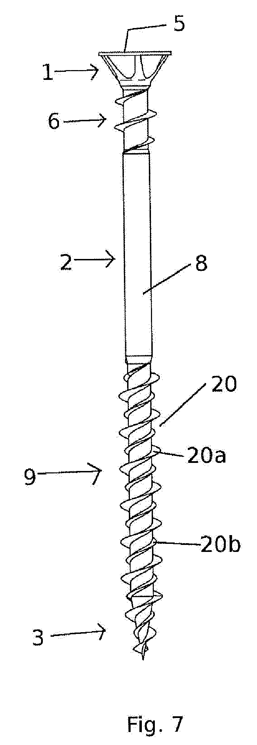

Die Figur 7 zeigt eine der Figur 1 ähnliche Seitenansicht einer weiteren Ausführungsform einer Schraube nach der Erfindung. Zur Bezeichnung der gleichen Elemente werden die gleichen Bezugszeichen verwendet. Der wichtigste Unterschied zu der Schraube nach Figur 1 besteht darin, dass das Schraubgewinde in dem Schraubgewindeabschnitt 9 als Doppelganggewinde 20 ausgebildet ist. Auch dadurch wird eine größere Steigung erreicht.

Im dargestellten Beispiel haben die beiden Windungen 20a, 20b einen unterschiedlichen Durchmesser. Die Aussage, dass der Außendurchmesser des Haltegewindes größer ist als der Außendurchmesser des Schraubgewindes gilt in diesem Fall natürlich für beide Gewindegänge 20a, 20b.

Der Schraubenkopf der Ausführungsform nach Figur 7 ist ebenso wie bei der Ausführungsform nach Figur 1 als Senkkopf mit Frästaschen an seiner Unterseite ausgebildet. Diese Frästaschen verbessern das Eindringen des Senkkopfs in das Material der zu befestigenden Platte 12, wie dies beispielsweise in Figur 6 dargestellt ist.

## Patentansprüche

1. Schraube, mit
1.1 einem sich von einem Antriebsende (1) bis zu einer Schraubenspitze (3) erstreckenden Schaft (2), der
1.2 einen von der Schraubenspitze (3) ausgehenden Schraubgewindeabschnitt (9) mit einem Schraubgewinde (10) und
1.3 einen von dem Antriebsende (1) ausgehenden Gewindeabschnitt (6) mit einem Haltegewinde (7) aufweist, wobei
1.4 die Gewinde beider Gewindeabschnitte die gleiche Gewinderichtung aufweisen,
1.5 der Kerndurchmesser beider Gewindeabschnitte (6, 9) gleich ist,
**gekennzeichnet dadurch, dass**
1.6 die Steigung des Haltegewindes (7) kleiner ist als die Steigung des Schraubgewindes (10) und
1.7 der Außendurchmesser des Haltegewindes (7) größer ist als der Außendurchmesser des Schraubgewindes (10), wobei
1.8 das Haltegewinde (7) auf einen Abschnitt (16) des zur Herstellung der Schraube benutzten Drahtstifts aufgewalzt ist, der vor dem Walzen einen größeren Durchmesser aufweist als der Schraubgewindeabschnitt (9).

2. Schraube nach Anspruch 1, bei der zwischen den beiden Gewindeabschnitten (6, 9) ein gewindefreier Schaftabschnitt (8) ausgebildet ist.

3. Schraube nach Anspruch 1 oder 2, bei der das Antriebsende (1) einen Schraubenkopf, insbesondere einen Senkkopf (4), ggf. mit Frästaschen an seiner Unterseite, aufweist.

4. Schraube nach einem der vorhergehenden Ansprüche, bei der das Haltegewinde (7) die Steigung eines Normalgewindes aufweist.

5. Schraube nach einem der vorhergehenden Ansprüche, bei der das Schraubgewinde (10) eine Grobgangsteigung aufweist.

6. Schraube nach einem der vorhergehenden Ansprüche, bei der das Schraubgewinde als Doppelganggewinde (20) ausgebildet ist.

7. Schraube nach Anspruch 6, bei der die beiden Windungen (20 a, 20 b) des Doppelganggewindes unterschiedliche Außendurchmesser aufweisen.

8. Schraube nach einem der vorhergehenden Ansprüche, bei der die Steigung des Schraubgewindes (10, 20) um etwa 35 % bis etwa 45 % größer ist als die Steigung des Haltegewindes (7).

9. Schraube nach einem der vorhergehenden Ansprüche, bei der der Außendurchmesser des Haltegewindes (7) zwischen 10% und 25% größer ist als der Außendurchmesser des Schraubgewindes (10, 20).

10. Schraube nach einem der vorhergehenden Ansprüche, bei der das Haltegewinde (7) zwischen zwei und sechs, insbesondere zwischen zwei und fünf, Windungen aufweist.

11. Schraube nach einem der vorhergehenden Ansprüche, bei der die Schraubenspitze (3) eine gewalzte Spitze ist.

12. Schraube nach einem der Ansprüche 1 bis 11, bei der die Schraubenspitze eine Bohrspitze bzw. Schneidspitze aufweist.

13. Verwendung einer Schraube nach einem der vorhergehenden Ansprüche zum Festschrauben von Platten (12) an Unterkonstruktionen (13) ohne Vorbohren, insbesondere als Eckverbinderschraube.

14. Verwendung nach Anspruch 13, bei der die Länge des gewindefreien Abschnitts (8) der Dicke der anzuschraubenden Platte (12) entspricht.

15. Verwendung nach Anspruch 14, bei der die axiale Länge des Haltegewindes (7) kleiner oder gleich ist als die Dicke der anzuschraubenden Platte (12).

16. Verfahren zum Herstellen einer Schraube nach einem der Ansprüche 1 bis 12, bei dem ein Drahtstift vor dem Walzen der Gewinde (7, 10) in einem der Länge des Halteabschnitts (6) entsprechenden Bereich (16) auf einen gegenüber dem Rest des Drahtstifts größeren Durchmesser aufgestaucht wird.

## Claims

1. A screw, comprising
1.1 a shank (2), extending from a drive end (1) up to a screw tip (3),
1.2 which shank includes a threaded screw portion (9) having a screw thread (10) starting from the screw tip (3) and
1.3 a threaded portion (6) having a retaining thread (7) starting from the drive end (1), wherein
1.4 the threads of both threaded portions have the same thread direction,
1.5 the core diameters of both threaded portions (6, 9) are the same,
1.6 **characterized in that**
the pitch of the retaining thread (7) is smaller than the pitch of the screw thread (10), and
1.7 the outer diameter of the retaining thread (7) is greater than the outer diameter of the screw thread (10), wherein
1.8 the retaining thread (7) is rolled onto a portion (16) of the wire nail used for producing the screw, which wire has a greater diameter prior to rolling than the threaded screw portion (9).

2. The screw according to claim 1, wherein a threadless shank portion (8) is provided between the two threaded portions (6, 9).

3. The screw according to claim 1 or 2, wherein the drive end (1) has a screw head, in particular a countersunk head (4), with milling pockets on the bottom side thereof, where required.

4. The screw according to any of the preceding claims, wherein the retaining thread (7) has the pitch of a standard thread.

5. The screw according to any of the preceding claims, wherein the screw thread (10) has a coarse pitch.

6. The screw according to any of the preceding claims, wherein the screw thread is a double pitch thread (20).

7. The screw according to claim 6, wherein the two turns (20 a, 20 b) of the double pitch thread have different outer diameters.

8. The screw according to any of the preceding claims, wherein the pitch of the screw thread (10, 20) is approximately 35% to approximately 45% greater than the pitch of the retaining thread (7).

9. The screw according to any of the preceding claims, wherein the outer diameter of the retaining thread (7) is between 10% and 25% greater than the outer diameter of the screw thread (10, 20).

10. The screw according to any of the preceding claims, wherein the retaining thread (7) has between two and six, in particular between two and five, turns.

11. The screw according to any of the preceding claims, wherein the screw tip (3) is a rolled tip.

12. The screw according to any of claims 1 to 11, wherein the screw tip includes a drilling tip or a cutting tip.

13. Use of a screw according to any of the preceding claims for screwing boards (12) fixedly to substructures (13) without primary drilling, in particular as corner connection screws.

14. Use according to claim 13, wherein the length of the threadless portion (8) corresponds to the thickness of the board (12) to be screwed on.

15. Use according to claim 14, wherein the axial length of the retaining thread (7) is smaller than or equal to the thickness of the board (12) to be screwed on.

16. Method for producing a screw according to any of claims 1 to 12, wherein, prior to rolling the threads (7, 10), a wire nail is deformed by upsetting to a greater diameter as compared to the rest of the wire nail in a region (16) corresponding to the length of the retaining portion (6).

## Revendications

1. Vis, comprenant
1.1 une tige (2) s'étendant d'une extrémité d'entraînement (1) jusqu'à une pointe de vis (3),
1.2 laquelle tige comporte une section filetée de vis (9) avec un filetage de vis (10) à partir de la pointe de vis (3) et
1.3 une section filetée (6) avec un filetage de retenue (7) à partir de l'extrémité d'entraînement (1),
1.4 les filetages des deux sections filetées présentant le même sens de filetage,
1.5 le diamètre de coeur des deux sections filetées (6, 9) étant le même,
1.6 **caractérisée en ce que**
le pas du filetage de retenue (7) est inférieur au pas du filetage de vis (10) et **en ce que**
1.7 le diamètre extérieur du filetage de retenue (7) est supérieur au diamètre extérieur du filetage de vis (10),
1.8 le filetage de retenue (7) étant laminé sur une section (16) du fil utilisé pour fabriquer la vis, ledit fil présentant, avant le laminage, un diamètre supérieur que la section filetée de vis (9).

2. Vis selon la revendication 1, dans laquelle entre les deux sections filetées (6, 9) une section de tige (8) non filetée est formée.

3. Vis selon la revendication 1 ou 2, dans laquelle l'extrémité d'entraînement (1) présente une tête de vis, en particulier une tête fraisée (4), le cas échéant avec des poches de fraisage sur sa face inférieure.

4. Vis selon l'une quelconque des revendications précédentes, dans laquelle le filetage de retenue (7) présente le pas d'un filetage normal.

5. Vis selon l'une quelconque des revendications précédentes, dans laquelle le filetage de vis (10) présente un filetage à pas gros.

6. Vis selon l'une quelconque des revendications précédentes, dans laquelle le filetage de vis est conçu sous forme de filetage double (20).

7. Vis selon la revendication 6, dans laquelle les deux spires (20 a, 20 b) du filetage double présentent des diamètres extérieurs différents.

8. Vis selon l'une quelconque des revendications précédentes, dans laquelle le pas du filetage de vis (10, 20) est supérieur au pas du filetage de retenue (7) d'environ 35 % à environ 45 %.

9. Vis selon l'une quelconque des revendications précédentes, dans laquelle le diamètre extérieur du filetage de retenue (7) est supérieur au diamètre extérieur du filetage de vis (10, 20) d'entre 10 % et 25 %.

10. Vis selon l'une quelconque des revendications précédentes, dans laquelle le filetage de retenue (7) présente entre deux et six, en particulier entre deux et cinq, spires.

11. Vis selon l'une quelconque des revendications précédentes, dans laquelle la pointe de vis (3) est une pointe laminée.

12. Vis selon l'une quelconque des revendications 1 à 11, dans laquelle la pointe de vis présente une pointe de forage ou bien une pointe de coupage.

13. Utilisation d'une vis selon l'une quelconque des revendications précédentes pour fixation par vis de planches (12) à des sous-constructions (13) sans percer un avant-trou, en particulier comme vis d'entretoise d'angle.

14. Utilisation selon la revendication 13, dans laquelle la longueur de la section de tige (8) non filetée corresponde à l'épaisseur de la planche (12) à visser.

15. Utilisation selon la revendication 14, dans laquelle la longueur axiale du filetage de retenue (7) est inférieure ou égale à l'épaisseur de la planche (12) à visser.

16. Procédé de production d'une vis selon l'une quelconque des revendications 1 à 12, dans lequel un fil est refoulé à un diamètre supérieur par rapport au reste du fil avant de laminer les filetages (7, 10) dans une région (16) correspondante à la longueur de la section de retenue (6).
